# EUROPEAN PATENT APPLICATION

(11) **EP 0 981 002 A1**
(43) Date of publication of application: **23.02.2000**
(21) Application number: 98202805.2
(22) Date of filing: 20.08.1998
(51) Int. Cl.: F16L 1/18, F16L 1/20

(54) **System for controlled lowering of a tube or cable**

(71) Applicant: Bogey Venlo B.V., 5902 RA Venlo (NL)
(72) Inventor: Beaujean, Joseph Marie Elise, NL-5913 VT Venlo (NL)
(74) Representative: de Bruijn, Leendert C.

(57) **Abstract**

System for controlled lowering of an elongated body such as a tube or cable (14), from a relatively high level, especially the (sea)water level to a relatively low level, especially the (sea)bottom, comprising an elongated tubular guide (18) which is connected to one or more buoyancy bodies, and means for braking the movement of said elongated body through said tubular guide, whereby
- the braking means (22) comprise a number of braking units incorporated in said tubular guide and distributing over the length thereof,
- the braking units are under control of a central control unit by means of which the braking force applied by each braking unit can be controlled.

## Description

The invention relates to a system for controlled lowering of an elongated body such as a tube or cable, from a relatively high level, especially the (sea)water level to a relatively low level, especially the (sea)bottom, comprising an elongated tubular guide which is connected to one or more buoyancy bodies, and means for braking the movement of said elongated body through said tubular guide

Such a system is already known from GB-947,196. The elongated tubular guide in this prior art system is especially destined to take care that the elongated object, which is lowered through said tubular guide, follows an in general S-shaped route, such that from an almost horizontal position the elongated object first makes a gradually increasing angle with the horizontal surface and, from a certain point about halfway sea level and sea bottom, makes a gradually decreasing angle with the horizontal surface. It is prevented thereby that the tube will buckle and becomes damaged.

To maintain the desired S-shaped position of the tubular guide and therewith of the elongated object moving through said tubular guide a number of buoyancy bodies are used. As described in GB-947,196 these buoyancy bodies could be embodied in different manners. On the one hand the attention is drawn to separate buoyancy bodies which are connected to the tubular guide through cables or chains distributed along the length of the tubular guide. On the other hand the attention is drawn to elongated bundles of rods of cellular material which through an outer surrounding jacket are attached to the tubular guide. By means of a correct distribution of the upwards acting forces the desired S-shaped configuration can be obtained.

To lower the elongated object, in the following indicated as the tube, in a controlled manner through the tubular guide it is necessary to use a certain brake mechanism for influencing the velocity with which the tube moves through the tubular guide. In those cases wherein each time new tube segments have to be welded to the end of the elongated tube, it may be necessary to even stop the tube now and then to enable the welding operations. In the prior art system use is made of a braking unit which is positioned near the upper end of the tubular guide.

In a first embodiment of this prior art system the braking unit cooperates with the inlet section of the tubular guide such that when the brake is applied the braking unit clamps around the tube and will become stuck against the input side of the tubular guide, because the dimensions of the braking unit are larger than the inner diameter of this tubular guide. The braking unit is through cables connected to a vessel. In another embodiment the tube runs over the deck of a vessel and the braking unit is positioned on deck of said vessel.

In both embodiments the braking unit should be able to develop a sufficient braking force to carry the full weight of the tube between the seawater level and the sea bottom level. With increasing water depth the braking force will have to be enlarged. In deeper water in general use is made of tubes with larger diameter and thicker walls to withstand the increased hydrostatic pressure. So, in the case of deep water not only the length of the tube will increase resulting in a proportionally increased weight, but also the specific weight of the tube increases. In other words, the total weight of the tube hanging on the braking unit, will increase more than proportionally and as a result thereof the braking force has to be increased more than proportionally to be able to even stop the movement of the tube if necessary.

Take for example a water depth of 2000 meter and a tube having a specific weight of 100 kg/m. In that case the braking unit has to carry a weight of at least 200,000 kg. If one assumes a friction coefficient of 0.1 between the braking unit and the tube, then the braking unit will have to be able to generate a braking force of at least 20,000,000 Newton. It will be clear that it is not inconceivable that by concentrating such a relatively high force on such a relatively small section of the tube the wall of the tube will collapse. It is possible that the wall of the tube will become dented locally and will tear eventually. That applies certainly to tubes which have an outer coating, for instance an anticorrosion layer to protect the tube against corrosion in the rather aggressive sea water or a layer of concrete to enlarge the weight of the tube and to assure a stable lay-down of the tube in its ultimate position on the sea bottom. These coatings or jackets are often brittle and can be damaged easily if the braking stresses are too high. Also anodes, which are in many cases attached to the surface of such tubes to realize a cathodic protection are in many cases not braking stress resistant.

On the other hand, there is the danger that the braking unit applies a too small braking force on the tube so that the tube could have the tendency to move with a higher speed than desired. If, under these circumstances, the grip of the braking unit on the tube decreases so far that the tube will start moving in an uncontrolled manner through the tubular guide then it is certainly not inconceivable that near the sea bottom level the tube becomes bended or kinked in which case the tube as a whole can be considered as lost or a very expensive repair procedure has to be performed, if such a procedure is possible after all.

To avoid these unfortunate circumstances the braking unit will have to be embodied in such a way that under all circumstances the braking unit is able to stop the tube as a whole with a limited stress concentration on any part of the pipe line. The configuration known from GB-947,196 does not satisfy in this respect.

The object of the invention is now to indicate in which manner the system of the type mentioned above has to be modified so that the system can be used in deeper water and with tubes which have an increasing specific weight. More specifically it is the object of the invention to indicate how the braking system should be embodied to avoid that locally applied braking forces have to be increased in an extreme manner such that the tube and/or the tube coating will become damaged. However, under any circumstances the applied forces should be sufficient to hold the pipe and to avoid that the pipe will start moving in an uncontrolled manner.

In agreement with the object the abovementioned system has now the characteristic that
- the braking means comprise a number of braking units incorporated in said tubular guide and distributed over the length thereof,
- the braking units are under control of a central control unit by means of which the braking force applied by each braking unit can be controlled. By making use of a number of braking units which are distributed over the length of the tubular guide one has obtained a situation that each braking unit only has to carry a part of the total weight of the tube and therefore has to be able to apply only a restricted braking stress onto the tube. Because of the smaller braking stresses the impact thereof on the tube is diminished significantly.

Take for instance a pipeline with a diameter of 60 cm which has a surface of approximately 2 m² per meter length. The weight of the pipeline is supposed to be 100 kg/m. Furthermore, it is assumed that the braking units are embodied such that each of them comes into contact with 1 m tube and that together they make contact with approximately the whole pipeline section extending between said relatively high level and said relatively low level. If under these circumstances a friction coefficient of 0.1 between the wall of the pipeline and the braking surface of the braking unit is taken into account then a braking force of only 50 cm water column is necessary for each meter pipeline.

It is remarked that a system comprising a number of braking units which are distributed over the length of the tubular guide is already known from US 5,575,590, especially the embodiment which is illustrated in Figure 17. In this US patent, granted to the Allseas Group SA, each braking unit comprises
- a rigid outer tubular wall
- a flexible tubular inflatable body, the outer wall of which is supported by said rigid outer tubular wall and the inner wall of which acts as braking surface.
The pressure inside the inflatable body of each of the braking units is preset independent of the other braking units on a value which is dependent on the depth at which the respective braking unit thereafter has to function. Because of the increasing hydrostatic pressure the air or gas in the inflatable body is compressed more and more with increasing depth. As a result the contact surface between the inflatable body and the tube becomes smaller and smaller so that in fact in each braking unit only a part of the initial braking surface will be active. Controlling the actual braking force under these circumstances in the prior art system is rather difficult or even impossible.

Each braking unit has to operate at a specific depth. If in agreement with the above-mentioned example a control range in the braking force of 50 cm water column is needed for each braking unit then it will be clear that a rise of only 1 m will result into a brake which becomes complete loose from the pipe wall, whereas a downwards movement of only 1 m will result into a brake which clamps tightly around the pipeline.

On the other hand the described and illustrated braking units could be very effective in transferring braking forces to the tube or cable because of the relatively large contact surface between the tube or cable and the inflatable body, even at increasing depth.

A further object of the invention is now to improve the controllability such that these control units may operate within the scope of the inventive system.

In agreement with said object a preferred embodiment of the system is characterised in that each of the braking units comprises
- a non stretchable outer tubular wall
- a flexible tubular inflatable body, the outer wall of which is supported by said outer tubular wall and the inner wall of which acts as braking surface,
- a valve unit for inflating or deflating the inflatable body, whereby each of said valve units is connected to a source of pressurized fluidum and each valve unit is controlled by said central control unit.

Each valve can be controlled in a depth dependent manner such that each braking unit applies the required braking force on the tube or cable.

In one further development each valve unit is connected to a separate fluid reservoir attached to the corresponding braking unit and acting as source of pressurized fluidum for said valve unit. Each braking unit is now able to operate independent of the others. The large number of reservoirs could be a disadvantage of this embodiment.

In another development a number of valve units (preferably all valve units) are connected to a fluid conduit which extends along the tubular guide and is connected to one fluid reservoir acting as source of pressurized fluidum for said valve units. Only one reservoir is needed in this embodiment, however, a fluid conduit is necessary between each valve unit and the common reservoir.

The control communication between the control centre and the valve units can be performed in various ways using data transfer along electrical connections, along acoustical communication paths, using radio waves, etc.

In all known prior art cases pressurised air is used as fluid for inflating or deflating the inflatable bodies of the braking units and for determining in correspondence therewith the applied braking force. Assume a water depth of 2000 m and assume a desired control range of 50 cm water column. In that case 4000 braking units would be necessary each capable of functioning at a different depth and at a different hydrostatic bias pressure.

With increasing water depth the controllability of the valve units becomes more and more a problem. The valve unit which has to operate for instance at 1000 m depth should have a pressure control range between 999,75 m and 1000,25 m water column. Such a control range poses a serious problem. This problem will be twice as serious for the most lower valve unit which has to operate in the pressure range between 1999,75 m and 2000,25 m water column. An accurate control within such a small control range under such relatively high bias pressure of the surrounding sea water is hardly performable.

The whole problem is caused by the depth dependent hydrostatic pressure. The question how to eliminate this problem appeared to be surprisingly simple. The hydrostatic pressure acting on the outside of the inflatable bodies has to be eliminated by the pressurizing control fluid inside the inflatable bodies. To obtain such a situation a preferred embodiment of the system is characterised in that the fluid has a specific weight equal to the specific weight of (sea)water. It is especially preferred that the fluid is (sea)water.

By using (sea)water as fluid the hydrostatic pressure difference is completely eliminated at all depths.

In a preferred system, in which the abovementioned fluid is (sea)water, the number of braking units is equal to one, said one braking unit comprising:
- an elongated non stretchable outer tubular wall
- an elongated flexible tubular inflatable body, the outer wall of which is supported by said outer tubular wall and the inner wall of which acts as braking surface,
- a valve unit connected to a pump unit through which (sea)water can be pumped in or out the inflatable body to obtain the required braking stress.

The abovementioned elongated outer wall and the elongated flexible tubular inflatable body preferably extends from just below sea level to just above bottom level. In that case the whole tube is guided and controlled by only one combined component.

If for reasons which will not be discussed here it is preferred to use two or more braking units then each of the braking units comprises
- a non stretchable outer tubular wall
- a flexible tubular inflatable body, the outer wall of which is supported by said outer tubular wall and the inner wall of which acts as braking surface,
   whereby all outer tubular walls are mechanically connected in series,
   whereby all flexible tubular inflatable bodies and a valve unit are connected in series by suitable conduits, and
   whereby furthermore the valve unit is connected to a pump unit through which (sea)water can be pumped in or out the series connected inflatable bodies to obtain the required braking stress.

The pump can be of a rather simple design which only has to be able to generate a pressure in the desired control pressure range, in the above example a pressure between 0 and 50 cm water column.

The invention will be explained further with reference to the attached drawings.
Figure 1 illustrates schematically the general situation during lowering of a tube or cable from a ship onto the sea bottom.
Figure 2 illustrates a cross-section through a system according to the invention.
Figure 3 illustrates a longitudinal section through a first embodiment of a system according to the invention especially at the interconnection between two sections of the elongated tubular guide.
Figure 4 illustrates a longitudinal section through a second embodiment of a system according to the invention especially at the interconnection between two sections of the elongated tubular guide and one end of the tubular guide
Figure 5 shows an embodiment with only one elongated brake unit and separate outside buoyancy bodies.
Figure 6 illustrates a cross section through the elongated brake unit of figure 5.

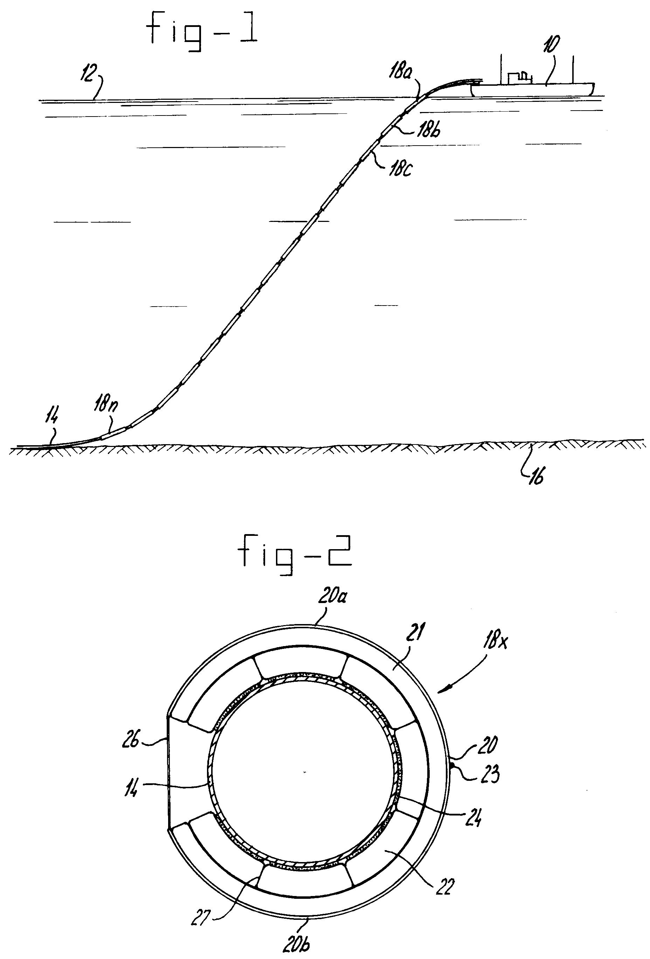

Figure 1 illustrates a vessel 10, floating on the sea surface 12, from which vessel 11 an elongated object such as a tube or cable 14 is lowered onto the sea bottom 16. To limit the velocity with which the tube or cable 14 is lowered and to maintain during the whole process an S-shape in the cable or tube 14 so that kinking or buckling of the cable or tube 14 is prevented, an elongated tubular guide is used which in the illustrated embodiment comprises a number of sections 18a, 18b, 18c ....... 18n. Each of those sections 18a etc. has a predetermined buoyant capacity necessary to maintain the abovementioned S-shape. Furthermore, each section comprises brake means which are clamped around the tubular cable 14 such that a braking force is applied to the tube or cable which is at least to a large degree in balance with the buoyant force.

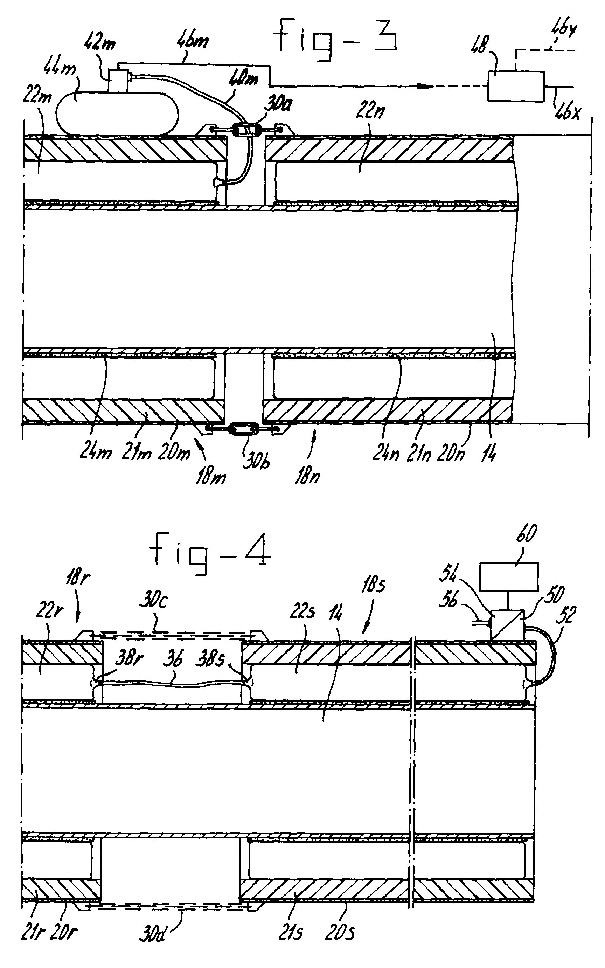

Figure 2 illustrates a cross-section through one of the sections 18x, clamped around a tube 14. The section 18x comprises a non stretchable outer tubular wall 20. Within said tubular wall a layer 21 is situated made from a material with a lower specific gravity than water, which material generates the abovementioned buoyancy force. As such suitable materials are known and furthermore the buoyancy features are not the subject of the invention Therefor a further detailed discussion is considered superfluous.

Within the layer 21 the braking unit is positioned comprising a flexible tubular inflatable body 22. At the inside surface this body may comprise a coating of friction material 24. However, taking into account the relatively large contact surface between the body 22 and the tube 14 in many cases this friction layer could be omitted.

To improve handling of the whole system it is preferred that the tubular configuration can be made from an initially flat or at least open configuration by folding the flat configuration around the tube 14 and fastening the longitudinal edges to each other. If the outer wall 20 is made of a rather stiff material such as metal then it is preferred that the outer wall 20 is divided into a number of segments interconnected by means of hinges. In the illustrated embodiment in Figure 2 there are two of such segments 20a and 20b interconnected by the hinge 23. On the other hand one could make the outer wall from any strong flexible but non stretchable material in which case the jacket could be attached as a blanket around the tube 14. The longitudinal edges of the outer wall are connected by means of a number of cables or chains 26 which preferably are as short as possible. Because of the presence of these cables or chains the flexible inflatable body 22 does not completely surround the cable or tube 14 but fills only the volume between the outer wall 20 and the cable or tube 14, which volume has to be (nearly) constant.

To improve the strength of the configuration and to improve the transfer of the braking forces from the braking layer 24 to the buoyancy layer 21 the braking cushion 22 might be internally subdivided by means of dividing walls one of which is indicated by 27 in figure 2. It will be clear that the resulting subvolumes of the cushion 22 are all interconnected so that the pressure inside each subvolume is always the same.

Figure 3 illustrates a longitudinal cross-section through a specific embodiment of the elongated tubular guide comprising at least the segments 18M and 18N. Each of the segments 18M, 18N,.. has an outer layer 20M, 20N,.., a buoyancy layer 21M, 21N,..,and a braking cushion 22M, 22N,.. of which the inner side could have a strengthening layer 24M, 24N,..of e.g. friction material. The various segments are interconnected by suitable means such as the chains 30A, 30B. In this embodiment the braking cushion 22M of segment 18M of the tubular guide is through a suitable conduit 40M and a valve unit 42M connected to a reservoir 44M. The reservoir 44M comprises for instance pressurized air which through the valve unit 42 can be filled into the inflatable body 22M. On the other hand the valve means 42M are able to let pressurized air escape from the body 22M through the conduit 40M into the surroundings. All other segments of the tubular guide are in the same manner equipped with valve means and reservoirs.

By controlling the inflating/deflating of the body 22M a predetermined pressure can be set as soon as the segment 18x has reached its operating depth. An electrical control line 46M extends from the valve means 42M to a central control unit 48. All other valve means from all other segments are in the same manner connected to this central control unit 48 as indicated by the dotted lines 46X and 46Y. Preferably, the central control unit 48 is installed on board of the vessel 10 and can be operated by the crew of said vessel to set and maintain the pressure in each of the inflatable bodies in each of the braking means at the desired value.

Instead of a pressurized fluid reservoir 44 for each of the segments of the elongated tubular guide, it will be clear even without detailed illustration that one (larger) reservoir can be installed somewhere along the tubular guide 18. In that case each segment of the tubular guide comprises only a set of valve means, which on the one hand are connected to the inflatable body of the respective segment and are on the other hand through suitable conduit means connected to said central reservoir. The valve means are in the same manner as in Figure 3 connected to a central controller 48 for controlling the pressure inside the various inflatable bodies.

As already indicated above, it is preferred to fill the inflatable bodies with a substance which has the same specific gravity as the surrounding (sea) water and more especially to fill the bodies actually with (sea)water. By filling these bodies with (sea)water, the problems with the hydrostatic pressure are eliminated. The hydrostatic pressure outside and inside the inflatable bodies 22 is equal. A rather small overpressure is already sufficient to generate a rather large braking force by each of the inflatable hollow bodies 22.

An example of an embodiment whereby sea water is used as the fluid for inflating/deflating the hollow bodies is illustrated in Figure 4. This figure shows parts of the segments 18R and 18S of the elongated body. Each of the segments 18S, 18R,.. has an outer layer 20S, 20R,.., a buoyancy layer 21S, 21R,..,and a braking cushion 22R, 22SN,.. The various segments are mechanically interconnected by suitable means such as the chains 30C, 30D. Although relatively long chains are shown the relatively short chains as indicated in Figure 3 are preferred.

The actual difference between Figures 3 and 4 relies in the fact that in Figure 4 all the inflatable bodies are connected in series by means of suitable conduits. One of these conduits 36 is visible at the left hand side of Figure 4. This conduit 36 is connected between the inflatable bodies 22R and 22S through suitable connectors 38R and 38S. The whole system comprises only one valve means 50 which through a suitable conduit 52 is connected to one of the inflatable bodies 18... in the series, in the illustrated case the last inflatable body 18S of the series. The valve means 50 cooperates with a pump 52 such that either (sea) water from the surroundings is pumped from the port 56 through the valve means 50 and the conduit 52 into the series circuit of inflatable bodies 22, or water is through the conduit 52, the valve means 50 and the port 56 pumped out of the series circuit of inflatable bodies. The inflating/deflating operation is under control of a central controller 60 which preferably is installed on board of the vessel 10.

In the embodiment of figure 4 only one valve in combination with only one pump is necessary to control the braking force developed by the combination of all braking means. Controlling this configuration by means of the controller is rather simple.

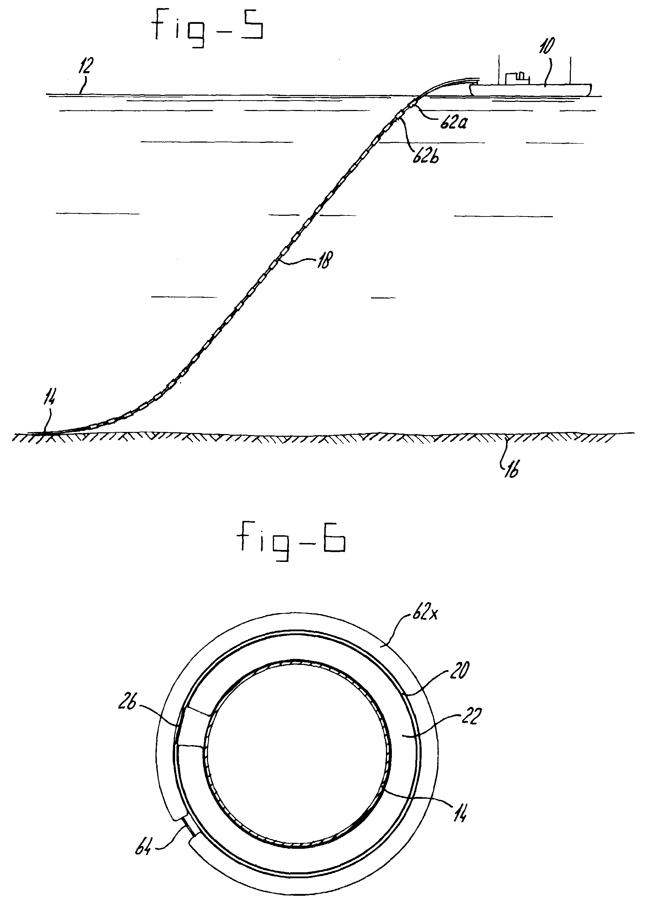

In stead of two or more braking units a preferred embodiment of the system, comprises only one elongated braking unit 18 as schematically illustrated in Figure 5. Figure 5 shows a view similar to the view in Figure 1. As illustrated in cross section in figure 6 the elongated body 18 now comprises only one combination of an outer layer 20, and a braking cushion 22. The pump/valve combination for inflating/deflating the braking cushion is installed on board the ship 10 and not shown separately in Figure 5.

In this embodiment the buoyancy capacity is supplied by a series of annular buoyancy bodies 62a, 62b, ... which are attached with mutual intervals around the elongated braking unit. The buoyancy bodies may have some flexibility so that they can be clipped around the unit 18 and secured by means of a suitable fastener 64 rather easily.

## Claims

1. System for controlled lowering of an elongated body such as a tube or cable, from a relatively high level, especially the (sea)water level to a relatively low level, especially the (sea)bottom, comprising an elongated tubular guide which is connected to one or more buoyancy bodies, and means for braking the movement of said elongated body though said tubular guide characterised in that
- the braking means comprise a number of braking units incorporated in said tubular guide and distributed over the length thereof,
- the braking units are under control of a central control unit by means of which the braking force applied by each braking unit can be controlled.

2. System according to claim 1, characterised in that each of the braking units comprises
- a non stretchable outer tubular wall
- a flexible tubular inflatable body, the outer wall of which is supported by said outer tubular wall and the inner wall of which acts as braking surface,
- a valve unit for inflating or deflating the inflatable body, whereby each of said valve units is connected to a source of pressurized fluidum and each valve unit is controlled by said central control unit.

3. System according claim 2, characterised in that, each valve unit is connected to a separate fluid reservoir attached to the corresponding braking unit and acting as source of pressurized fluidum for said valve unit.

4. System according to claim 2, characterized in that a number of valve units are connected to a fluid conduit which extends along the tubular guide and is connected to one fluid reservoir acting as source of pressurized fluidum for said valve units.

5. System according to one of the claim 2-4, characterised in that the fluid has a specific weight equal to the specific weight of (sea)water.

6. System according to one of the claims 2-5, characterised in that the fluid is (sea)water

7. System according to 5 or 6, characterised in that the number of braking units is equal to one, said one braking unit comprising:
- an elongated non stretchable outer tubular wall
- an elongated flexible tubular inflatable body, the outer wall of which is supported by said outer tubular wall and the inner wall of which acts as braking surface,
- a valve unit connected to a pump unit though which (sea)water can be pumped in or out the inflatable body to obtain the required braking force.

8. System according to claim 1, characterised in that the number of braking units is two or more and each of the braking units comprises
- a non stretchable outer tubular wall
- a flexible tubular inflatable body, the outer wall of which is supported by said rigid outer tubular wall and the inner wall of which acts as braking surface,
whereby all outer walls are mechanically connected in series,
whereby all flexible tubular inflatable bodies and a valve unit are connected in series by suitable conduits,
whereby furthermore the valve unit is connected to a pump unit though which (sea)water can be pumped in or out the series connected inflatable bodies to obtain the required braking force.

9. System according to one of the preceding claims, characterized in that the tubular guide is made out of interconnected sections each comprising one of the braking units.
